# EUROPÄISCHE PATENTSCHRIFT

(11) **EP 0 529 553 B1**
(45) Veröffentlichungstag und Bekanntmachung des Hinweises auf die Patenterteilung: **06.11.1996**
(21) Anmeldenummer: 92114369.9
(22) Anmeldetag: 22.08.1992
(51) Int. Cl.: A22C 11/02

(54) **Füllrohr zum Füllen von schlauchförmigen Hüllen**
Stuffing horn for filling tubular casings
Tube de remplissage pour bourrer de boyaux tubulaires

(30) Priorität: 30.08.1991 DE 9110734 U
(43) Veröffentlichungstag der Anmeldung: 03.03.1993
(73) Patentinhaber: HOECHST AKTIENGESELLSCHAFT, 65926 Frankfurt am Main (DE)
(72) Erfinder: Künzel, Udo, W-6222 Johannisberg (DE); Geiss, Friedrich, W-6200 Wiesbaden (DE); Romeike, Arno, W-6204 Taunusstein 2 (DE)

(56) Entgegenhaltungen:
- EP-A- 0 070 363
- EP-A- 0 133 573
- EP-A- 0 207 234
- EP-A- 0 257 315
- FR-A- 2 332 908
- GB-A- 2 100 571
- US-A- 4 535 508
- US-A- 4 727 624

## Beschreibung

Die Erfindung betrifft ein Füllrohr zum Füllen einer Schlauchhülle mit pastöser Masse wie Wurstmasse, mit einer Rasteinrichtung für einen Kalibrierring, wobei die Rasteinrichtung aus einem oder mehreren Rastelementen besteht, die einen Kalibrierring in eine vorbestimmte Position auf dem Füllrohr einrasten lassen.

Eine Gesamtvorrichtung zum Befüllen von schlauchförmigen Hüllen mit pastösem Füllgut beseht aus einem Extruder, der das Füllgut durch ein Füllrohr in die schlauchförmige Hülle preßt. Die zu füllende Hülle befindet sich im allgemeinen in geraffter Form als sogenannte Raupe auf dem Füllrohr und wird durch das eingepreßte Füllgut entrafft und vom Füllrohr abgezogen. Um die Hülle prall und faltenfrei mit dem Füllgut ausfüllen zu können, ist es erforderlich, den Abzug der Hülle vom Füllrohr durch eine Bremse zu verzögern. Die Bremse befindet sich in der Nähe der Füllrohröffnung und preßt die entraffte schlauchförmige Hülle mit einstellbarer Kraft gegen die Außenseite des Füllrohrs.

Als besonders zweckmäßig hat es sich erwiesen, wenn die geraffte Hülle sich auf einem hohlzylindrischen Kern befindet. Dieser hohlzylindrische Kern kann mitsamt darauf befindlicher geraffter Hülle auf das Füllrohr geschoben werden und, nachdem die Hülle vollständig entnommen wurde, auch leicht wieder von diesem entfernt werden. Üblicherweise weisen diese auf einem Kern gerafften Hüllen einen sogenannten Kalibrierring auf, über den die Hülle vor dem Befüllen gezogen wird und der dazu dient, die Hülle auf einen konstanten Durchmesser aufzudehnen (US-A-4,202,075; US-A-4,292,711; DE-A-32 42 147; EP-A-0 105 446; EP-A-0 126 474; EP-A-0 133 573; GB-A-1 565 355; GB-A-2 100 571). Der Kalibrierring ist integraler Bestandteil des Kerns oder auf diesem angebracht.

Aus der FR-A-2 332 908 ist ein Kalibrierring zum Anordnen in einem entrafften Abschnitt einer Länge einer gerafften schlauchförmigen Nahrungsmittelhülle bekannt, der einen ringförmigen Außenrand und eine Öffnung zum Aufschieben und Befestigen auf einem Füllrohr einer Stopfvorrichtung zusammen mit der Nahrungsmittelhülle aufweist. Benachbart zu der Öffnung sind elastische Finger vorgesehen, die selbstsperrend mit dem Füllrohr in Eingriff gebracht werden können und nur unter permanenter Deformation von dem Füllrohr wieder gelöst werden können, d.h. mit anderen Worten, daß der Kalibrierring nach einmaligem Gebrauch nicht wiederverwendbar ist und als Abfall beseitigt werden muß.

In der EP-A-0 070 363 ist eine Vorrichtung zum gleichzeitigen Entfälteln, Glätten und Bremsen einer gerafften Schlauchhülle beschrieben, bei der ein ringförmiger Hohlkörper auf dem äußeren Umfang eines Füllrohres fixiert ist. Der ringförmige Hohlkörper besteht aus einer Ringscheibe, die ein Zylinder mit kreisförmigem Außenumfang und einer zentralen Öffnung zum Aufschieben und lösbaren Fixieren auf dem Hüllrohr einer üblichen Stopfvorrichtung ist. Die zentrale Öffnung hat einen Durchmesser, der im wesentlichen dem äußeren Durchmesser des Füllrohres entspricht. Die lösbare Befestigung des ringförmigen Hohlkörpers am Füllrohr erfolgt beispielsweise mit einem Gewinde oder einem Bajonettverschluß oder über einen Schnappverschluß mit Hilfe von abbrechbaren Elementen, von elastischen Stegen oder mit Hilfe eines Sicherungsringes neben oder in der zentralen Öffnung des ringförmigen Hohlkörpers. Derartige Elemente rasten in eine Nut, Nocke oder Rille des Hüllrohres ein. Der maximale Durchmesser des zylinder- oder ringförmigen Hohlkörpers ist kleiner als der innere Durchmesser der entrafften Schlauchhülle, so daß eine Aufweitung zum gleichzeitigen Entfälteln und Glätten der Schlauchhülle für ein einwandfreies Befüllen der Schlauchhülle nicht erforderlich ist und es vollkommen ausreicht, wenn die Schlauchhülle über die Außenseite des ringförmigen Hohlkörpers gezogen wird, ohne daß es zu einer Aufweitung der Schlauchhülle über ihren ursprünglichen Durchmesser hinaus kommt.

Ein Nachteil vieler bekannter Vorrichtungen ist insbesondere darin zu sehen, daß Probleme bei der Abfallbeseitigung auftreten. Die Hüllen werden vom Hersteller direkt auf den Kern gerafft und Kern samt Hülle in den Handel gebracht. Der Kunde (Wursthersteller) schiebt den Kern/Raupen-Verbund auf das Füllrohr der Füllmaschine auf und füllt die Hülle, die sich kontinuierlich entrafft und vom Kern abgezogen wird. Schließlich verbleibt nur noch der Kern auf dem Füllrohr, der entfernt und gegen eine Kartusche (Kern/Raupen-Verbund) ersetzt wird. Der Kern - meist aus Kunststoff gefertigt - verbleibt als Abfall.

Aufgabe der Erfindung ist es, ein Füllrohr und einen damit verbindbaren Kalibrierring zu schaffen, der mehrfach wiederverwendbar ist, einfach auf dem Füllrohr positioniert und losgelöst werden kann und so fixiert ist, daß er der Abzugsreibung der sich entfaltenden und über ihn hinweglaufenden Schlauchhülle widersteht.

Diese Aufgabe wird erfindungsgemäß durch ein Füllrohr der eingangs beschriebenen Art in der Weise gelöst, daß dieses Rastelement eine Rampe, eine Rastschulter und eine Rastnut aufweist und daß der Kalibrierring mit mindestens einem Rastlappen und einem Führungslappen auf der Seite eines inneren Ringes ausgestattet ist, wobei der Rastlappen in die zugehörige Rastnut eingerastet ist.

In Ausgestaltung der Erfindung stehen die Rampe und die Rastschulter von der Oberfläche des Füllrohres ab und ist die Rastnut in die Oberfläche des Füllrohres eingelassen. Die Rampe weist im allgemeinen ein dreieckförmiges Profil auf.

In Weitergestaltung der Erfindung besteht der Kalibrierring aus zwei einseitig miteinander verbundenen konzentrischen Ringen und besitzt im axialen Querschnitt U-Form. Zweckmäßigerweise ist an dem äußeren Ring eine tellerrandartige Schulter angebracht, deren Außendurchmesser der Kalibriergröße einer Schlauchhülle entspricht. Ein Führungsbund verbindet den inneren mit dem äußeren Ring. In Ausgestaltung der Erfindung sind die Führungslappen und die Rastlappen in alternierender Reihenfolge an der in axialer Richtung dem Führungsbund entgegengesetzten Seite des Ringes angeordnet.

Die erfindungsgemäße Kombination von Füllrohr und wiederverwendbarem Kalibrierring vermeidet den Anfall von nicht wieder- bzw. weiterverwendbaren Kernen. Der Verarbeiter schiebt einen gerafften Hüllenstab auf das erfindungsgemäße Füllrohr, steckt anschließend den Kalibrierring auf das Füllrohr, rastet diesen ein, zieht den Hüllenanfang über den Kalibrierring, setzt den ersten Clip und kann mit dem Befüllen der Hülle beginnen. Nachdem die Hülle aufgebracht ist, nimmt er den Kalibrierring vom Füllrohr herunter, schiebt einen neuen Hüllenstab auf das Füllrohr und verwendet den gleichen Kalibrierring. Der Kalibrierring ist lediglich normalem Verschleiß unterworfen und sollte zweckmäßig von Zeit zu Zeit ausgewechselt werden.

Im folgenden wird die Erfindung anhand der Figuren 1 bis 8 näher erläutert,
- Figur 1: zeigt eine perspektivische Gesamtansicht eines Teils des Füllrohrs und des Kalibrierrings, wobei der Ring noch nicht auf das Füllrohr aufgeschoben ist.
- Figur 2: zeigt eine Perspektive wie Figur 1, jedoch mit auf dem Füllrohr verrastetem Kalibrierring.
- Figur 3: zeigt eine Stirnansicht auf den Kalibrierring nebst Füllrohr in einer Winkelstellung zueinander.
- Figur 4: zeigt einen Schnitt gemäß der Linie IV-IV in Figur 3.
- Figur 5: zeigt einen Schnitt gemäß der Linie V-V in Figur 3.
- Figur 6: zeigt eine Stirnansicht wie in Figur 3, jedoch in verrasteter Position.
- Figur 7: zeigt einen Schnitt gemäß der Linie VII-VII in Figur 6.
- Figur 8: zeigt einen Schnitt gemäß der Linie VIII-VIII in Figur 6.

Das erfindungsgemäße Füllrohr ist ein konventionelles Füllrohr, welches dahingehend abgewandelt wurde, daß es eine Rastvorrichtung für einen abnehmbaren, auf diesem Füllrohr einrastbaren Kalibrierring aufweist. Das Rohr wird zweckmäßig aus einem nichtrostenden Stahl gefertigt und weist an der dem Extruder zugewandten Seite Mittel zur Befestigung an dem Extruder auf (beispielsweise einen Flansch). Die Rastvorrichtung befindet sich an der dem Extruder abgewandten Seite, nahe der Austrittsöffnung, vorzugsweise im letzten Achtel des Rohres. Die Rastvorrichtung muß so beschaffen sein, daß ein Kalibrierring von der Austrittsöffnungsseite des Füllrohres her auf das Füllrohr geschoben werden kann und in einer vorbestimmten Position auf dem Füllrohr einrastet, und zwar so, daß der Ring der Reibungskraft der über ihn hinweggleitenden Hülle widerstehen kann und während des Entfaltens der gerafften Hülle nicht von dem Rohr geschoben wird.

In einer speziellen Ausführungsform besteht die Rastvorrichtung aus einer oder mehreren um den Umfang des Füllrohrs 1 verteilten Rastelementen, jeweils bestehend aus einer Rampe 2, einer Rastschulter 3 und einer Rastnut 4. Rampe 2 und Rastschulter 3 erheben sich von der Oberfläche des Füllrohrs 1, und die Rastnut 4 ist in die Oberfläche eingelassen. Die Rampe 2 hat vorzugsweise ein dreieckförmiges Profil.

Der erfindungsgemäße Kalibrierring 5 wird bevorzugt aus einem thermoplastischen Kunststoff hergestellt und in seinem Durchmesser an den gewünschten Durchmesser der gefüllten Wursthüllen angepaßt. Der Ring (5) selbst besteht in einer speziellen Ausführungsform aus zwei einseitig verbundenen konzentrischen Ringen (Doppelringverbund), die im axialen Querschnitt eine U-Form aufweisen. An dem äußeren, größeren Ring ist an der offenen Seite des Us eine tellerförmige Schulter angebracht, wobei der Außendurchmesser dieser Schulter der Kalibriergröße der schlauchförmigen Hülle entspricht. Zweckmäßigerweise ist die Schulter, über die die schlauchförmige Hülle beim Entraffen läuft, abgerundet. Der innere Ring weist an seiner Verbindungsstelle mit dem äußeren Ring einen auf die Oberfläche des Füllrohrs 1 gerichteten umlaufenden Führungsbund 8 auf. Die dem Führungsbund 8 in axialer Richtung entgegengesetzte Seite des inneren Rings wird gebildet durch in alternierender Reihenfolge angeordnete Führungslappen 6 und Rastlappen 7.

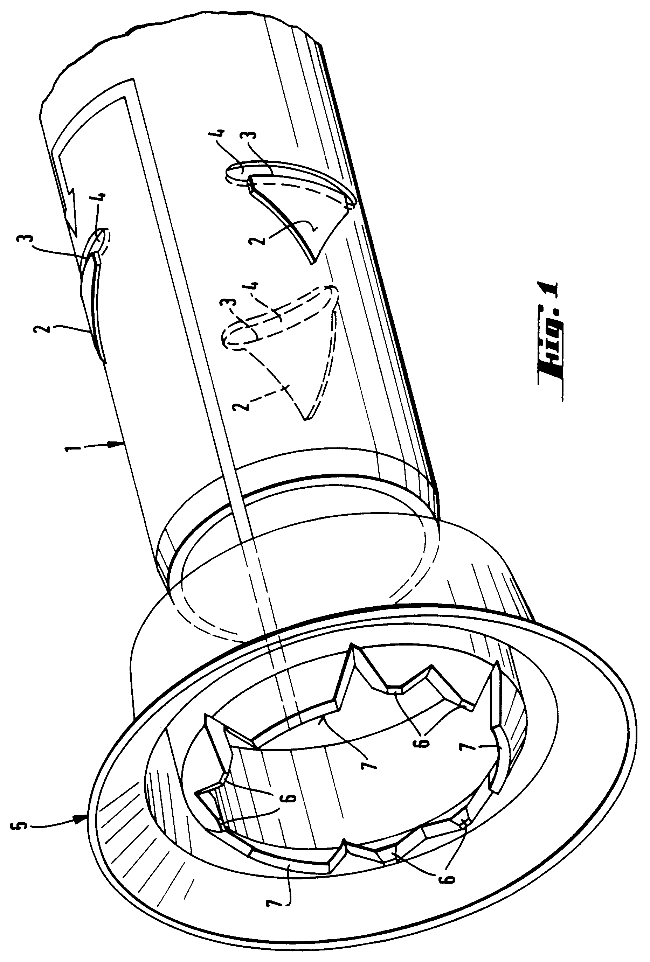

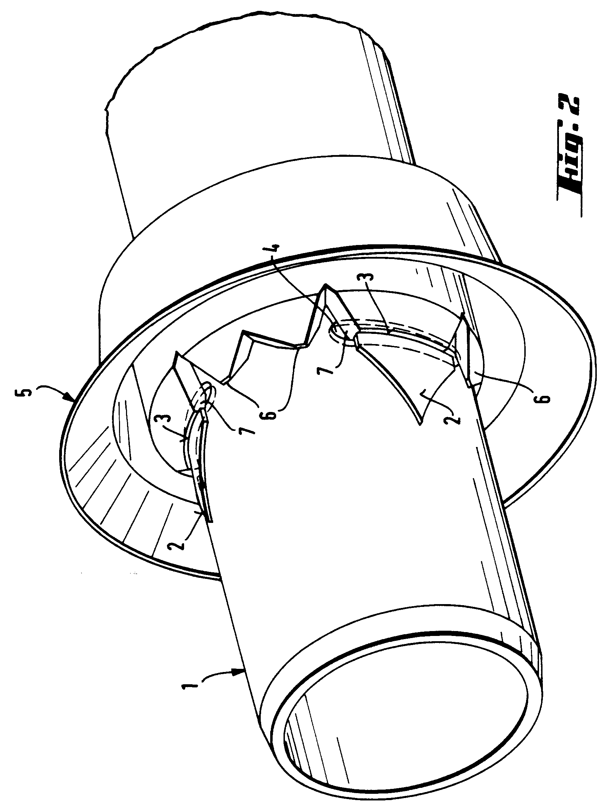

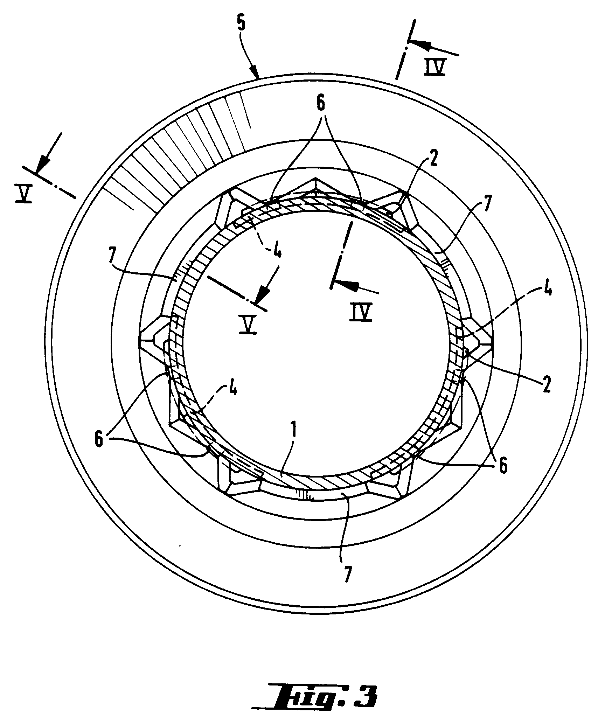

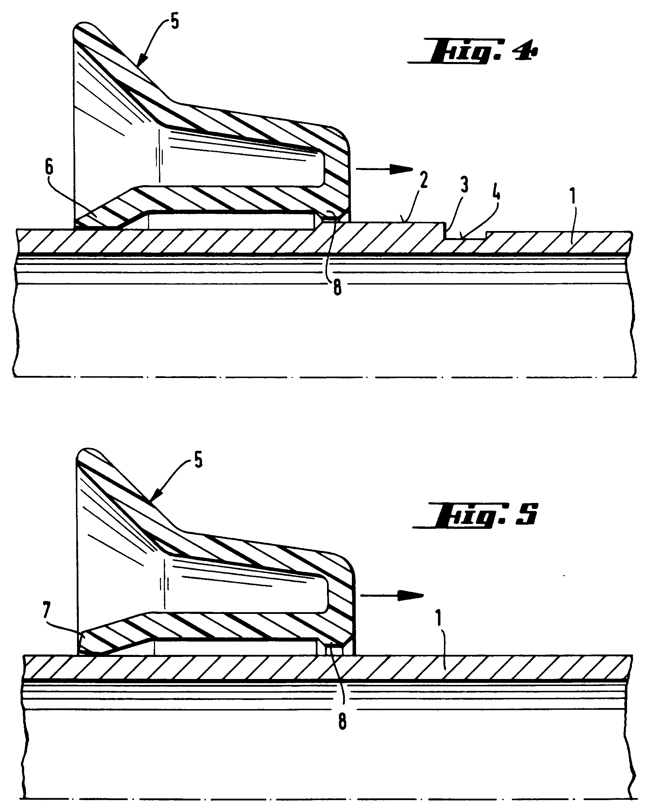

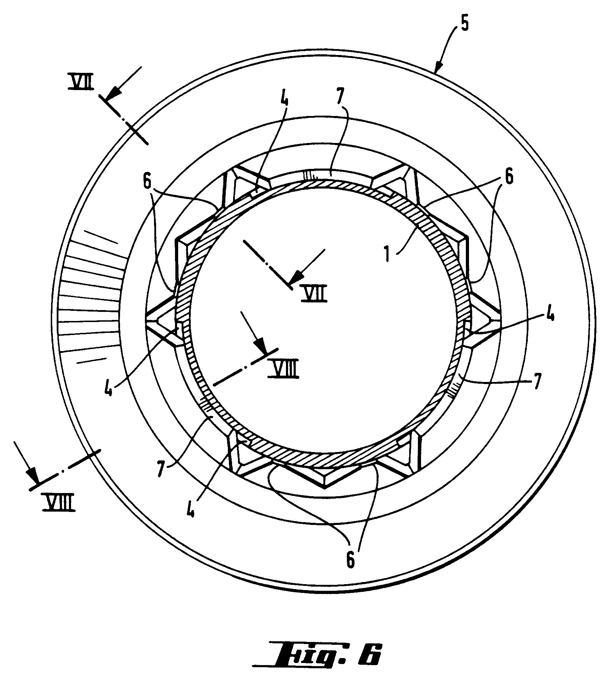

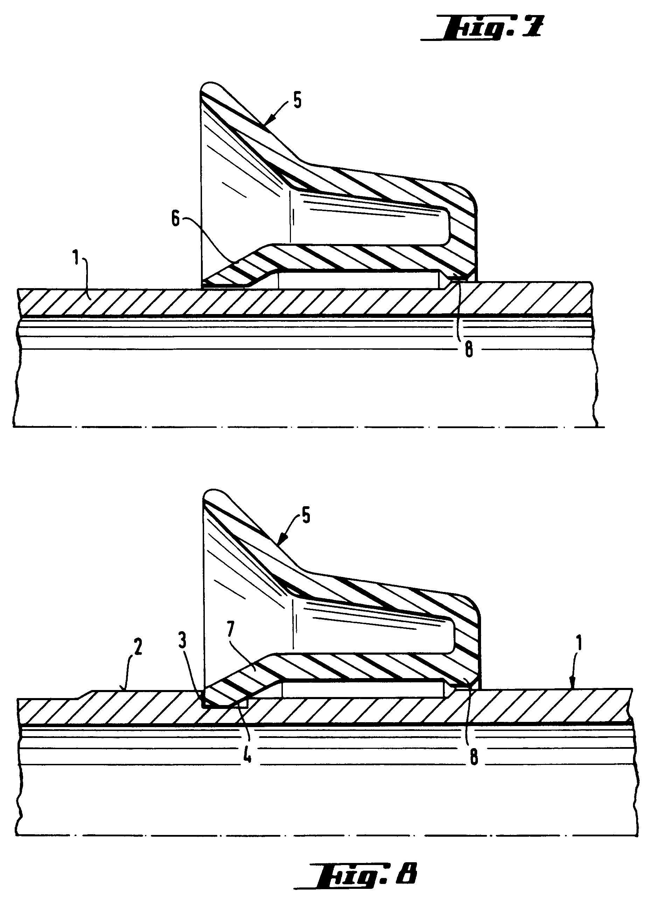

Beim Aufschieben gemäß Aufschiebeweg 9 der Fig. 1 des Kalibrierrings 5 auf das Füllrohr 1 gleiten die Führungslappen 6 über die Rampe 2. Sobald sich die Führungslappen 6 hinter der Rastschulter 3 befinden, kann der Ring 5 gedreht werden (bei drei Rastelementen um 60°), und die Rastlappen 7 rasten in den Rastnuten 4 ein. Der Kalibrierring 5 ist nun darauf fixiert, daß er der Abzugsreibung der sich entfaltenden und über ihn hinweglaufenden Hülle widersteht.

## Patentansprüche

1. Füllrohr zum Füllen einer Schlauchhülle mit pastöser Masse wie Wurstmasse, mit einer Rasteinrichtung für einen Kalibrierring, wobei die Rasteinrichtung aus einem oder mehreren Rastelementen besteht, die einen Kalibrierring in eine vorbestimmte Position auf dem Füllrohr einrasten lassen, dadurch gekennzeichent, daß dieses Rastelement eine Rampe (2), eine Rastschulter (3) und eine Rastnut (4) aufweist und daß der Kalibrierring (5) mit mindestens einem Rastlappen (7) und mindestens einem Führungslappen (6) auf der Seite eines inneren Ringes ausgestattet ist, wobei der Rastlappen (7) in die zugehörige Rastnut (4) eingerastet ist.

2. Füllrohr nach Anspruch 1, dadurch gekennzeichnet, daß die Rampe (2) und die Rastschulter (3) von der Oberfläche des Füllrohres (1) abstehen und daß die Rastnut (4) in die Oberfläche des Füllrohres eingelassen ist.

3. Füllrohr nach Anspruch 1, dadurch gekennzeichnet, daß die Rampe (2) ein dreieckförmiges Profil aufweist.

4. Füllrohr nach Anspruch 1, dadurch gekennzeichnet, daß der Kalibrierring (5) aus zwei einseitig miteinander verbundenen konzentrischen Ringen besteht und im axialen Querschnitt U-Form aufweist.

5. Füllrohr nach Anspruch 4, dadurch gekennzeichnet, daß an dem äußeren Ring eine tellerrandartige Schulter angebracht ist, deren Außendurchmesser der Kalibriergröße einer Schlauchhülle entspricht.

6. Füllrohr nach Anspruch 4, dadurch gekennzeichnet, daß ein Führungsbund (8) den inneren mit dem äußeren Ring verbindet.

7. Füllrohr nach Anspruch 4, dadurch gekennzeichnet, daß die Führungslappen (6) und die Rastlappen (7) in alternierender Reihenfolge an der in axialer Richtung dem Führungsbund (8) entgegengesetzten Seite des inneren Ringes angeordnet sind.

## Claims

1. A filling tube for filling a tubular casing with a pasty filling material such as sausage meat, comprising a locking device with a calibrating ring, said locking device consisting of one or more locking elements by which a calibrating ring is locked on the filling tube in a predetermined position, characterized in that said locking element comprises a bead (2), a locking shoulder (3) and a locking groove (4) and that the calibrating ring (5) is provided with at least one locking tab (7) and at least one guide tab (6) on the side of an inner ring, said locking tab (7) being locked in the locking groove associated thereto.

2. The filling tube as claimed in claim 1, characterized in that the bead (2) and the locking shoulder (3) are raised from the surface of the filling tube (1) and that the locking groove (4) is set into the surface of the filling tube.

3. The filling tube as claimed in claim 1, characterized in that the bead (2) has a triangular profile.

4. The filling tube as claimed in claim 1, characterized in that the calibrating ring (5) consists of two concentric rings which are connected on one side and which are U-shaped in axial cross-section.

5. The filling tube as claimed in claim 4, characterized in that a dish-shaped shoulder is provided on the outer ring, the outer diameter of this shoulder corresponding to the caliper size of a tubular casing.

6. The filling tube as claimed in claim 4, characterized in that the inner and the outer ring are connected by a guide collar (8).

7. The filling tube as claimed in claim 4, characterized in that the guide tabs (6) and the locking tabs (7) are arranged in alternating sequence on that side of the inner ring which is axially opposite the guide collar (8).

## Revendications

1. Tube de remplissage destiné à remplir une enveloppe tubulaire d'une masse pâteuse telle que la chair à saucisse, comprenant un dispositif d'encliquetage pour une bague de calibrage, le dispositif d'encliquetage étant composé d'un ou plusieurs éléments d'encliquetage qui amènent une bague de calibrage à s'encliqueter dans une position prédéterminée sur le tube de remplissage, caractérisé en ce que cet élément d'encliquetage possède une rampe (2), un épaulement d'encliquetage (3) et une gorge d'encliquetage (4), et par le fait que la bague de calibrage (5) est équipée d'au moins une languette d'encliquetage (7) et d'au moins une languette de guidage (6) sur le côté d'une bague intérieure, la languette (7) d'encliquetage étant encliquetée dans la gorge de verrouillage (4) correspondante.

2. Tube de remplissage selon la revendication 1, caractérisé en ce que la rampe (2) et l'épaulement d'encliquetage (3) font saillie sur la surface du tube de remplissage (1) et en ce que la gorge d'encliquetage (4) est pratiquée dans la surface du tube de remplissage.

3. Tube de remplissage selon la revendication 1, caractérisé en ce que la rampe (2) présente un profil triangulaire.

4. Tube de remplissage selon la revendication 1, caractérisé en ce que la bague de calibrage (5) est composée de deux bagues concentriques réunies l'une à l'autre d'un côté et présente une forme en U en section axiale.

5. Tube de remplissage selon la revendication 4, caractérisé en ce que, sur la bague extérieure est formé un épaulement en forme de bord d'assiette dont le diamètre extérieur correspond à la taille de calibrage d'une enveloppe tubulaire.

6. Tube de remplissage selon la revendication 4, caractérisé en ce qu'une embase de guidage (8) relie la bague intérieure à la bague extérieure.

7. Tube de remplissage selon la revendication 4, caractérisé en ce que les languettes de guidage (6) et les languettes d'encliquetage (7) sont disposées en succession en alternance le long du côté de la bague intérieure qui est à l'opposé de l'embase de guidage (8) dans la direction axiale.
